# EUROPÄISCHE PATENTSCHRIFT

(11) **EP 0 929 419 B1**
(45) Veröffentlichungstag und Bekanntmachung des Hinweises auf die Patenterteilung: **19.12.2001**
(21) Anmeldenummer: 97941988.4
(22) Anmeldetag: 08.09.1997
(51) Int. Cl.: B60R 21/20

(54) **Airbag-Einrichtung für ein Kraftfahrzeug**
Motor vehicle airbag system
Système d'airbag pour automobile

(30) Priorität: 10.10.1996 DE 19641759
(43) Veröffentlichungstag der Anmeldung: 21.07.1999
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38436 Wolfsburg (DE)
(74) Vertreter: Neubauer, Hans-Jürgen, Dipl.-Phys.
(86) Internationale Anmeldenummer: EP9704861
(87) Internationale Veröffentlichungsnummer: WO9815432

(56) Entgegenhaltungen:
- EP-A- 0 357 225
- DE-A- 4 217 174
- GB-A- 2 291 014
- US-A- 5 209 510
- PATENT ABSTRACTS OF JAPAN vol. 018, no. 231 (M-1599), 27.April 1994 & JP 06 024286 A (NISSAN MOTOR CO LTD), 1.Februar 1994,
- PATENT ABSTRACTS OF JAPAN vol. 096, no. 011, 29.November 1996 & JP 08 175317 A (TOKAI RIKA CO LTD), 9.Juli 1996,

## Beschreibung

Die Erfindung betrifft eine Airbag-Einrichtung für ein Kraftfahrzeug mit einer gesteuerten Entfaltung des Airbags zum Schutz eines Insassen nach dem Oberbegriff des Anspruchs 1.

Airbag-Einrichtungen in Kraftfahrzeugen mit einem oder mehreren Airbags in den verschiedensten Ausführungsformen und für die verschiedensten Zwecke sind bekannt. Bestandteil dieser Einrichtungen können Sensorsysteme sein, die zum Auslösen der Entfaltung des oder der Airbags die Sitzposition des zu schützenden Insassen in Relation zum jeweiligen Airbag messen und aus dem Ergebnis dieser Messungen den Zeitpunkt und den Umfang der Airbagentfaltung ableiten.

Eine gattungsgemäße Airbageinrichtung ist aus der US-A-5,209,510 bekannt, die einen hinter einen Innenausstattungsteil angeordneten und durch einen Gasgenerator aufblasbaren Airbag umfasst. Zudem weist diese Airbag-Einrichtung eine im Bereich des Innenausstattungsteils angeordnete Abdeckung für den zusammengefalteten Airbag auf, die im Falle einer Airbag-Auslösung eine Öffnung zur Entfaltung des Airbags in eine Schutzstellung für einen Körperbereich eines Insassen freigibt. Ferner ist eine Sensoreinrichtung zur Erfassung einer Unfallsituation vorgesehen, wobei in Abhängigkeit von Signalen der Sensoreinrichtung der von der Abdeckung in einer Unfallsituation freizugebende Durchtrittsquerschnitt der Öffnung hinsichtlich seiner Größe einstellbar ist.

Konkret wird hier der freizugebende Durchtrittsquerschnitt der Öffnung in Abhängigkeit von der durch die Sensoreinrichtung erfassten Fahrzeuggeschwindigkeit eingestellt, so dass der Airbag entsprechend dem freigegebenen Durchtrittsquerschnitt der Öffnung vor dem Innenausstattungsteil unterschiedlich groß und aggressiv aufgeblasen werden kann. Die Steuerung des Airbags erfolgt hier somit lediglich in Abhängigkeit von der Fahrzeuggeschwindigkeit.

Die DE 44 20 114 A1 hat eine Airbag-Einrichtung für den Front- und Seitenschutz zum Gegenstand, bei der als Auslösegerät eine Steuerelektronik angeordnet ist, die die Richtung und die Intensität eines Aufpralles, aber auch die Sitzbelegung erfasst und die in Abhängigkeit von den Signalen die Airbags einzeln oder in Kombination auslöst.

Es sind Airbag-Einrichtungen zur Anordnung hinter einer sich im Auslösungsfall öffnenden Abdeckung in der Armaturentafel bekannt, die neben dem Oberkörperschutz auch einen Knieschutz für den Insassen sicherstellen, indem bei der Entfaltung des Airbags durch diesen ein beweglich hinter der Armaturentafelverkleidung gelagertes Kniepolster aus einer Ruhelage in eine an die Knie des Insassen angenäherte Position geschwenkt wird. Dabei kann das Kniepolster auch als Klappe ausgebildet sein, die eine Staukammer für den gefalteten Luftsack abdeckt und einen Teil der unteren Armaturentafelverkleidung bildet, der über eine Aufreißkante oder Sollbruchstelle an dem darüberliegenden Teil der Armaturenbrettverkleidung angeschlossen ist. An den Gasgenerator kann zusätzlich zum Airbag für den Oberkörperschutz ein Hilfs-Airbag für den Knieschutz angeschlossen sein, der im aktivierten Zustand zwischen einer fahrzeugaufbaufesten Stützwand und dem in Schutzstellung befindlichen Kniepolster angeordnet ist (DE 39 08 713 A1).

Des weiteren (DE 31 47 780 C2) ist eine Airbag-Einrichtung mit einer Druckentlastungseinrichtung bekannt, um die Airbagentfaltung möglichst unabhängig von Temperaturschwankungen zu machen. Aus dieser Schrift ist es auch bekannt, einen Airbag so anzuordnen, daß dieser sowohl den Oberkörper als auch die Knie des Insassen zu schützen vermag.

Druckentlastungsventile werden auch eingesetzt, um den Gasmassenstrom für den Airbag in Abhängigkeit von der Sitzposition des Fahrzeuginsassen zu steuern, beispielsweise zu verringern, wenn sich der Insasse bei einem Aufprall nicht in seiner vorbestimmten Sitzposition, sondern in vorgebeugter Position (out-of-position) befindet, damit der Airbag nicht mit vollem Gasdruck auf die Insassen wirkt. Zur Steuerung des Gasdruckes in einem Airbag können auch Stufengeneratoren eingesetzt werden, die allerdings recht aufwendig sind.

Schließlich sei die DE 26 06 641 C2 erwähnt, die eine Airbag-Einrichtung zur Anordnung unterhalb der Armaturentafel zum Gegenstand hat, die einen als Knieaufprallschutz dienenden Hohlkörper mit einem darin in Ruhestellung angeordneten Airbag für den Schutz des Oberkörpers des Insassen aufweist.

Aufgabe der Erfindung ist es, für eine Airbag-Einrichtung nach dem Oberbegriff des Anspruchs 1 eine an die jeweilige Sitzposition von Fahrzeuginsassen angepaßte Füllcharakteristik zu ermöglichen.

Die Aufgabe wird bei einer Airbag-Einrichtung für ein Kraftfahrzeug nach dem Oberbegriff des Anspruchs 1 durch dessen kennzeichnende Merkmale gelöst. Vorteilhafte Ausgestaltungen sind in den Unteransprüchen dargestellt.

Der Airbag ist in bekannter Weise hinter einem Verkleidungsteil (Armaturentafel, Handschuhkasten, Türverkleidung, Sitzpolster oder dergleichen) eines Kraftfahrzeuges angeordnet und mit einer im Bereich des Innenausstattungsteils angeordneten Abdeckung versehen, die im Falle einer Airbag-Auslösung eine Öffnung vorgebbarer Größe zur Entfaltung des Airbags für den Schutz des Insassen freigibt. Die Abdeckung ist vorzugsweise als stabiler Schild ausgebildet, der die Öffnung vollständig freigibt, wenn sich der Insasse in seiner vorbestimmten Position befindet, und der die Öffnung gesteuert in Abhängigkeit von Signalen einer Sensoreinrichtung nur teilweise freigibt, wenn sich der Insasse in einer out-of-position befindet. Die Größe der gegebenen Öffnung wird also in Abhängigkeit von der Insassenposition mit entsprechenden Sensoren gesteuert. Der Airbag wird zwar mit dem vollen Gasmassenstrom beaufschlagt, gelangt jedoch bei einer out-of-position des Insassen nur zum Teil in die Schutzposition für den Insassenkörper, wobei die Größe dieses Teiles durch die Größe der Öffnung bestimmt ist. Der übrige Teil des sich entfaltenden Airbag wird in einen Freiraum hinter der Armaturentafel umgelenkt oder in eine Position gebracht, durch die eine zusätzliche Schutzstellung für einen Körperbereich des Insassen gegeben ist, vorzugsweise für den Kniebereich.

Vorteilhaft ist es, die Abdeckung als Schwenkteil auszubilden, das hinter der Armaturentafel um eine quer zur Fahrzeuglängsrichtung verlaufende Achse schwenkbar gelagert ist. Eine derartig ausgebildete Abdeckung läßt sich einfach an die Gestaltung der Armaturentafel anpassen und in diese integrieren.

Es ist zweckmäßig, die Öffnung für den Airbag oberhalb der Abdeckung vorzusehen, weil deren Gewicht dann eine durch die Airbag-Entfaltung verursachte Schwenkung nach unten in eine Öffnungsstellung unterstützt. Dabei kann an der Innenseite der Abdeckung ein Leitelement angeordnet sein, das einerseits die Entfaltung des Airbags in Richtung auf die zu bildende Öffnung lenkt und das andererseits auch eine Kraftkomponente zum Nachuntenschwenken der Abdeckung erzeugt. In der Ruhestellung des Airbags kann die Abdeckung in der diesen völlig abdeckenden Position durch eine einfache Rasteinrichtung gehalten sein, die durch den sich entfaltenden Airbag gelöst wird.

Zweckmäßig ist es, wenn die Abdeckung zur Einstellung der Größe der Öffnung mit einem Anschlag zusammenwirkt, der in mehreren vertikalen Stellungen in Abhängigkeit von der Insassenposition festlegbar ist und dessen jeweilige Stellung unabhängig von einer Airbag-Auslösung ständig an die Insassenposition angepaßt wird, was in bekannter Weise durch eine Steuereinrichtung ermöglicht wird.

Der Teil des Airbags, der nicht zum Schutz des Oberkörpers des Insassen eingesetzt wird, wird gemäß einer bevorzugten Ausführungsform zur Bildung einer zusätzlichen Schutzstellung für die Knie des Insassen genutzt, dadurch, daß er in eine Lage vor den Knien des Insassen gelenkt und in dieser Position durch eine vorhandene fahrzeugfrontseitige Anlage abgestützt wird, oder dadurch, daß er zur Abstützung eines an der Armaturentafel angeordneten Kniepolsters herangezogen wird, wobei das Maß der Schutzwirkung in jedem Fall durch die Größe des zur Verfügung stehenden Teiles im Kniebereich und damit letztlich durch die Insassenposition bestimmt ist.

Der Airbag kann vorteilhaft mäanderförmig gefaltet und derart zum Gasgenerator angeordnet sein, daß der aus diesem austretende Gasmassenstrom direkt in die Falten eindringt und die Entfaltung unverzüglich auf einfache Weise und unbehindert bewirkt. Eine derartige Anordnung ist gegeben, wenn der mäanderförmig gefaltete Airbag vertikal angeordnet ist. durch die Größe des zur Verfügung stehenden Teiles im-Kniebereich und damit letztlich durch die Insassenposition bestimmt ist.

Der Airbag kann vorteilhaft mäanderförmig gefaltet und derart zum Gasgenerator angeordnet sein, daß der aus diesem austretende Gasmassenstrom direkt in die Falten eindringt und die Entfaltung unverzüglich auf einfache Weise und unbehindert bewirkt. Eine derartige Anordnung ist gegeben, wenn der mäanderförmig gefaltete Airbag vertikal angeordnet ist.

Die Erfindung wird nachstehend anhand eines Ausführungsbeispiels erläutert. In der zugehörigen Zeichnung zeigen schematisch:
- Fig.1:: eine erfindungsgemäße Airbag-Einrichtung mit gefaltetem und in Ruhestellung befindlichem Airbag und
- Fig.2:: die Einrichtung mit dem entfalteten Airbag.

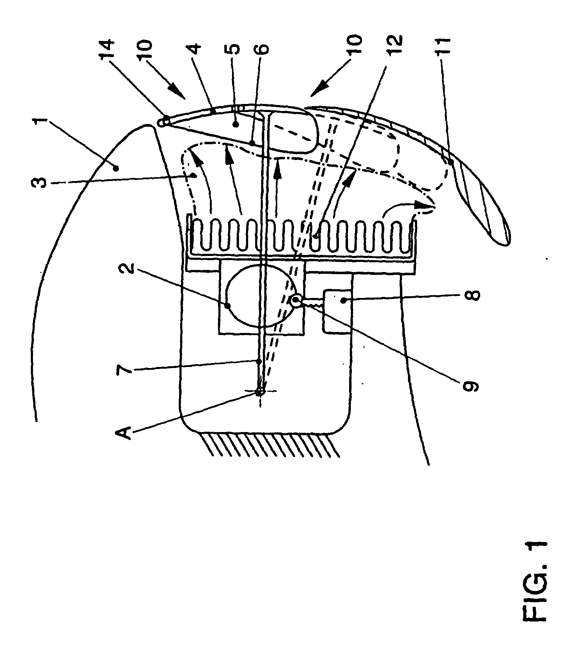

In Fig.1 ist eine erfindungsgemäße Airbag-Einrichtung für ein Kraftfahrzeug mit einem hinter einer Armaturentafel 1 angeordneten und durch einen Gasgenerator 2 aufblasbaren Airbag 3 und mit einer im Bereich der Armaturentafel 1 angeordneten Abdeckung 4 gezeigt. Diese ist im wesentlichen unbiegsam und als Schild für den sich entfaltenden Airbag 3 ausgebildet, derart, daß sich der Airbag 3 in Abhängigkeit von der Stellung der Abdeckung 4 entweder nur oberhalb oder oberhalb sowohl als auch unterhalb derselben entfalten kann, wobei die Abdeckung 4 auf der Innenseite ein Leitelement 5 mit einer Leitschräge 6 für den Airbag 3 aufweist.

Die Abdeckung 4 ist als Schwenkteil ausgebildet und mit zwei seitlich an diesem angeordneten Schwenkhebeln 7 im Bereich hinter der Armaturentafel 1 um eine quer zur Fahrzeuglängsrichtung verlaufende Achse A schwenkbar gelagert, wobei der Schwenkbereich der Schwenkhebel 7 nach unten durch jeweils einen mit einer Steuereinrichtung 8 verbundenen und verstellbaren Anschlag 9 bestimmt wird. Die Abdeckung 4 ist weiterhin derart angeordnet, daß sie den hinter der Armaturentafel 1 angeordneten und gefalteten Airbag 3 völlig abdeckt und bei sich entfaltendem Airbag 3 durch eine Schwenkung nach unten eine Öffnung 10 freigibt und hinter ein an der Armaturentafel 1 angeordnetes Kniepolster 11 geschwenkt wird (gestrichelt dargestellt). Der Airbag 3 ist in seiner Ruhestellung mäanderförmig gefaltet, wobei ein Faltenstapel in vertikaler Anordnung gebildet ist und die Falten 12 entlang des im Aufprallfall erzeugten Gasmassenstromes (Pfeilrichtung) angeordnet sind.

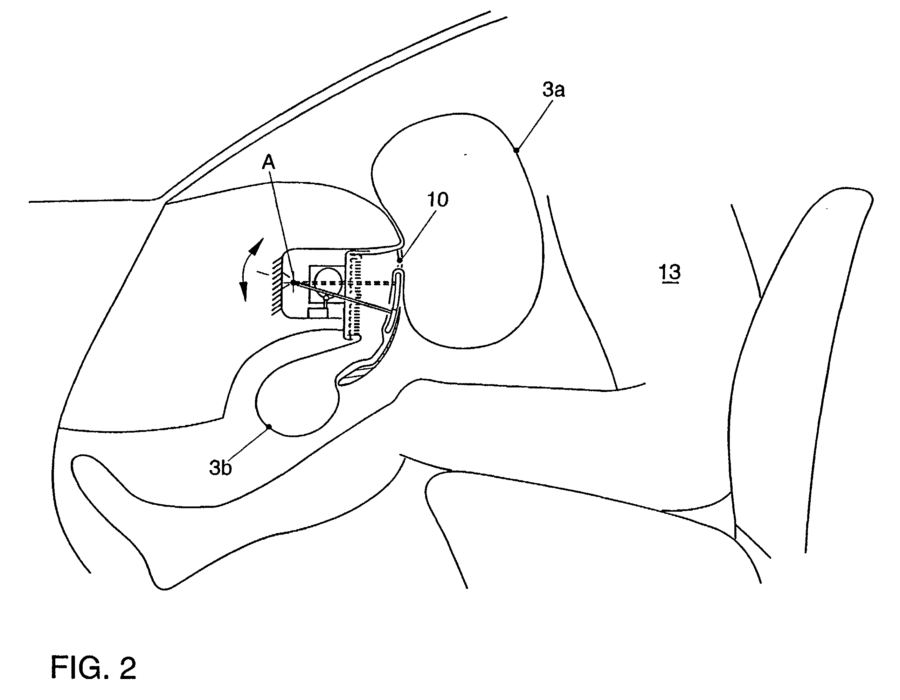

Fig.2 zeigt den Airbag im entfalteten Zustand bei einem in out-of-position befindlichen Insassen 13, in der sich dieser näher an der Armaturentafel 1 befindet als in seiner vorbestimmten Sitzstellung. Der entfaltete Airbag 3 hat mit einem (größeren) Teil 3a eine Schutzstellung für den Oberkörper des Insassen eingenommen und mit einem (kleineren) Teil 3b eine Schutzstellung für die Knie des Insassen, teilweise hinter dem Kniepolster 11. In dieser Stellung ist die Öffnung 10 durch ein Schwenken der Abdeckung nach unten teilweise freigegeben.

Die Abdeckung 4 wird in der Ruhestellung des Airbags 3 durch seitlich angeordnete Rastelemente 14 (nicht weiter dargestellt) an der Armaturentafel 1 lösbar gehaltert. Sensoren überwachen die Position des Fahrzeuginsassen 13 und steuern über die Steuereinrichtung 8 die Stellung der beiden Anschläge 9. Im Fall eines Aufpralles wird der Gasgenerator 2 gezündet, und der entstehende Gasmassenstrom drückt den Airbag gegen das Leitelement 5 mit der Leitschräge 6 der Abdeckung 4, wodurch diese infolge der nach unten gerichteten Kraftkomponente aus ihrer Verrastungsstellung gelöst und - unterstützt durch ihr Eigengewicht - nach unten geschwenkt wird, bis die Schwenkhebel 7 am jeweiligen Anschlag 9 anschlagen. Die Stellung der Anschläge 9 bestimmt die Größe der Öffnung 10 und auch die Größe des unterhalb der Abdeckung 4 gegebenen Freiraumes für den Airbag. Je näher sich der Insasse an der Armaturentafel 1 befindet, desto kleiner ist die zwischen der Abdeckung 4 und der Armaturentafel 1 gebildete Öffnung 10 für die Airbag-Entfaltung zur Einnahme der für den Oberkörper vorgesehenen Schutzstellung (Teil 3a) und desto größer ist der Freiraum unterhalb der Abdeckung 4, so daß auch der für den Kniebereich vorgesehene Schutzteil (Teil 3b) um so größer sein wird. Je größer die Öffnung 10 ist, desto kleiner ist der Freiraum unterhalb der Abdeckung 4 und desto größer ist der Teil 3a des sich entfaltenden Airbags 3. Seine maximale Größe erreicht der Airbag 3 in diesem Bereich (Teil 3a), wenn sich der Insasse 13 in seiner vorbestimmten Sitzposition befindet.

In einem besonders bevorzugten Ausführungsbeispiel ist die Abdeckung 4 als Aufprallelement ausgeführt, das über Energieabsorptionselemente am Fahrzeugaufbau abstützbar ist. Solche Energieabsorptionselemente können teleskopartig ausgeführte Schwenkhebel 7 mit Kraftbegrenzerwirkung und/oder deformationsfähige Aufnahmen für die Achse A sein. Nach Erreichen einer vorgegebenen Verschwenkung des Schwenkhebels 7 kann je nach Fahrzeugtyp eine Verriegelung oder kraftbegrenzte Rückverstellung erfolgen.

## Patentansprüche

1. Airbag-Einrichtung für ein Kraftfahrzeug mit
- einem hinter einem Innenausstattungsteil (1) angeordneten und durch einen Gasgenerator aufblasbaren Airbag (3),
- einer im Bereich des Innenausstattungsteils (1) angeordneten Abdeckung (4) für den zusammengefalteten Airbag (3), die im Falle einer Airbag-Auslösung eine Öffnung (10) zur Entfaltung des Airbags (3) in eine Schutzstellung für einen Körperbereich eines Insassen (13) freigibt,
- einer Sensoreinrichtung zur Erfassung einer Unfallsituation, wobei
in Abhängigkeit von Signalen der Sensoreinrichtung der von der Abdeckung (4) in einer Unfallsituation freizugebende Durchtrittsquerschnitt der Öffnung (10) hinsichtlich seiner Größe einstellbar ist, **dadurch gekennzeichnet,**
**dass** mit der Sensoreinrichtung ferner eine Insassenposition und Sitzbelegung erfassbar ist,
**dass** der in einer Unfallsituation freizugebende Durchtrittsquerschnitt der Öffnung (10) in Abhängigkeit von einer durch die Sensoreinrichtung erfassten Insassenposition einstellbar ist dergestalt, dass die Abdeckung (4) in Abhängigkeit von der erfassten Insassenposition so verlagerbar ist, dass diese die Öffnung (10) bei sich in seiner vorbestimmten Position befindlichem Insassen (13) vollständig freigibt oder dass diese die Öffnung (10) bei sich nicht in seiner vorbestimmten Position befindlichem Insassen (13) nur teilweise freigibt.

2. Airbag-Einrichtung nach Anspruch 1, **dadurch gekennzeichnet, daß** die Abdeckung (4) als Schild für den sich entfaltenden Airbag (3) ausgebildet ist, durch den ein Teil (3b) desselben ablenkbar oder in eine Position bringbar ist, durch die eine zusätzliche Schutzstellung für einen weiteren Körperbereich des Insassen (13) gegeben ist.

3. Airbag-Einrichtung nach Anspruch 1, **dadurch gekennzeichnet, daß** das Innenausstattungsteil eine Armaturentafel ist.

4. Airbag-Einrichtung nach Anspruch 2, **dadurch gekennzeichnet, daß** die zusätzliche Schutzstellung in Höhe der Knie des Insassen (13) gegeben ist.

5. Airbag-Einrichtung nach einem oder mehreren der vorhergehenden Ansprüche, **dadurch gekennzeichnet, daß** die Größe der Öffnung (10) in Stufen steuerbar ist.

6. Airbag-Einrichtung nach einem oder mehreren der vorhergehenden Ansprüche, **dadurch gekennzeichnet, daß** die Abdeckung (4) als Schwenkteil ausgebildet ist, das hinter der Armaturentafel (1) um eine quer zur Fahrzeuglängsrichtung verlaufende Achse (A) schwenkbar gelagert ist.

7. Airbag-Einrichtung nach Anspruch 6, **dadurch gekennzeichnet, daß** die Abdeckung (4) an ihrer Innenseite ein Leitelement (5) für den Airbag (3) aufweist.

8. Airbag-Einrichtung nach Anspruch 6 oder 7, **dadurch gekennzeichnet, daß** die Abdeckung (4) mit einem Anschlag (9) zusammenwirkt, der in mehreren vertikalen Stellungen festlegbar ist und die Stellungen durch die Insassenposition bestimmt sind.

9. Airbag-Einrichtung nach einem oder mehreren der vorhergehenden Ansprüche, **dadurch gekennzeichnet, daß** die zusätzliche Schutzstellung des Airbags (3) hinter einem an der Armaturentafel (1) angeordneten Kniepolster (11) gegeben ist.

10. Airbag-Einrichtung nach einem oder mehreren der vorhergehenden Ansprüche, **dadurch gekennzeichnet, daß** der Airbag (3) mäanderförmig gefaltet und derart angeordnet ist, daß der aus dem Gasgenerator (2) austretende Gasmassenstrom direkt in die Falten (12) eindringt.

11. Airbag-Einrichtung nach Anspruch 4, **dadurch gekennzeichnet, daß** die Abdeckung (4) als Aufprallelement ausgeführt ist, das zumindest mittelbar über wenigstens ein Energieabsorptionselement an Aufbauteilen des Kraftfahrzeugs abstützbar ist.

## Claims

1. Airbag device for a motor vehicle, having
- an airbag (3) which is arranged behind an interior trim part (1) and can be inflated by a gas generator,
- a covering (4) for the collapsed airbag (3), which covering is arranged in the region of the interior trim part (1) and in the event of the airbag being triggered releases an opening (10) for the deployment of the airbag (3) into a protective position for a body area of an occupant (13),
- a sensor device for detecting an accident situation, in which the passage cross section of the opening (10), which cross section is to be released by the covering (4) in an accident situation, can be adjusted in its size as a function of signals of the sensor device, **characterized**
**in that** the sensor device can further be used to detect an occupant's position and seat occupation,
**in that** the passage cross section of the opening (10), which cross section is to be released in an accident situation, can be adjusted as a function of an occupant's position, which is detected by the sensor device, such that the covering (4) can be displaced as a function of the detected occupant's position in such a manner that the said covering completely releases the opening (10) when the occupant (13) is in his predetermined position, or in such a manner that the said covering only partially releases the opening (10) when the occupant (13) is not in his predetermined position.

2. Airbag device according to Claim 1, **characterized in that** the covering (4) is designed as a shield for the deploying airbag (3) and, by means of the shield, a part (3b) of the airbag can be deflected or can be brought into a position providing an additional protective position for a further body area of the occupant (13).

3. Airbag device according to Claim 1, **characterized in that** the interior trim part is a dashboard.

4. Airbag device according to Claim 2, **characterized in that** the additional protective position is provided level with the knee of the occupant (13).

5. Airbag device according to one or more of the preceding claims, **characterized in that** the size of the opening (10) can be controlled in stages.

6. Airbag device according to one or more of the preceding claims, **characterized in that** the covering (4) is designed as a pivoting part which is mounted behind the dashboard (1) in a manner allowing it to pivot about an axis (A) running transversely to the longitudinal direction of the vehicle.

7. Airbag device according to Claim 6, **characterized in that** the covering (4) has, on its inside, a guiding element (5) for the airbag (3).

8. Airbag device according to Claim 6 or 7, **characterized in that** the covering (4) interacts with a stop (9) which can be fixed in a number of vertical positions and the positions are determined by the occupant's position.

9. Airbag device according to one or more of the preceding claims, **characterized in that** the additional protective position of the airbag (3) is provided behind a knee cushion (11) arranged on the dashboard (1) .

10. Airbag device according to one or more of the preceding claims, **characterized in that** the airbag (3) is folded in meandering form and is arranged in such a manner that the gas mass flow emerging from the gas generator (2) penetrates directly into the folds (12).

11. Airbag device according to Claim 4, **characterized in that** the covering (4) is designed as an impact element which can be supported at least indirectly, via at least one energy-absorption element, on body parts of the motor vehicle.

## Revendications

1. Dispositif d'airbag pour un véhicule à moteur, comprenant
- un airbag (3) disposé derrière une pièce d'installation intérieure (1) et pouvant être gonflé par un générateur de gaz,
- un couvercle (4) pour l'airbag (3) plié, disposé dans la région de la pièce d'installation intérieure (1), qui libère une ouverture (10) en cas de déclenchement de l'airbag, pour déplier l'airbag (3) dans une position de protection pour une région du corps d'un occupant (13),
- un dispositif de détection pour détecter une situation d'accident,
la section transversale de passage de l'ouverture (10) à libérer par le couvercle (4) en cas de situation d'accident étant ajustable en ce qui concerne sa taille, en fonction de signaux du dispositif de détection, **caractérisé en ce que**
une position de l'occupant et une occupation du siège peuvent en outre être détectées avec le dispositif de détection,
la section transversale de passage de l'ouverture (10) à libérer en cas de situation d'accident peut être ajustée en fonction d'une position de l'occupant détectée par le dispositif de détection de telle sorte que le couvercle (4) puisse être déplacé en fonction de la position de l'occupant détectée, de telle sorte que celui-ci libère complètement l'ouverture (10) si l'occupant (13) se trouve dans sa position prédéterminée ou que celui-ci n'ouvre que partiellement l'ouverture (10) si l'occupant (13) ne se trouve pas dans sa position prédéterminée.

2. Dispositif d'airbag selon la revendication 1, **caractérisé en ce que** le couvercle (4) est formé en tant que protection pour l'airbag se dépliant (3), grâce auquel une partie (3b) de celui-ci peut être déviée ou amenée dans une position assurant une protection supplémentaire pour une autre région du corps de l'occupant (13).

3. Dispositif d'airbag selon la revendication 1, **caractérisé en ce que** la partie d'installation intérieure est un pupitre de conduite.

4. Dispositif d'airbag selon la revendication 2, **caractérisé en ce que** la position de protection supplémentaire est à hauteur des genoux de l'occupant (13).

5. Dispositif d'airbag selon une ou plusieurs des revendications précédentes, **caractérisé en ce que** la taille de l'ouverture (10) est ajustable par degrés.

6. Dispositif d'airbag selon une ou plusieurs des revendications précédentes, **caractérisé en ce que** le couvercle (4) est formé en tant que pièce pivotante, qui est montée à pivotement derrière le pupitre de conduite (1) autour d'un axe (A) s'étendant transversalement à la direction longitudinale du véhicule.

7. Dispositif d'airbag selon la revendication 6, **caractérisé en ce que** le couvercle (4) présente sur sa face interne un élément de guidage (5) pour l'airbag (3).

8. Dispositif d'airbag selon la revendication 6 ou 7, **caractérisé en ce que** le couvercle (4) coopère avec une butée (9) qui peut être fixée en plusieurs positions verticales, et les positions sont déterminées par la position de l'occupant.

9. Dispositif d'airbag selon une ou plusieurs des revendications précédentes, **caractérisé en ce que** la position de protection supplémentaire de l'airbag (3) est derrière un coussin (11) pour les genoux disposé sur le pupitre de conduite (1).

10. Dispositif d'airbag selon une ou plusieurs des revendications précédentes, **caractérisé en ce que** l'airbag (3) est plié en accordéon et est disposé de telle sorte que le flux massique gazeux sortant du générateur de gaz (2) pénètre directement dans les plis (12).

11. Dispositif d'airbag selon la revendication 4, **caractérisé en ce que** le couvercle (4) est réalisé en tant qu'élément de choc qui peut être supporté au moins de manière indirecte par au moins un élément d'absorption d'énergie sur des pièces de construction du véhicule.
